# FASCICULE DE BREVET EUROPEEN

(11) **EP 0 456 803 B1**
(45) Date de publication et mention de la délivrance du brevet: **02.02.1994**
(21) Numéro de dépôt: 91900829.2
(22) Date de dépôt: 30.11.1990
(51) Int. Cl.: B60T 1/06, F16D 55/10

(54) **FREIN A DISQUE, NOTAMMENT POUR VEHICULE AUTOMOBILE**
SCHEIBENBREMSE, INSBESONDERE FÜR KRAFTFAHRZEUGE
DISC BRAKE, IN PARTICULAR FOR AUTOMOBILES

(30) Priorité: 01.12.1989 FR 8915928
(43) Date de publication de la demande: 21.11.1991
(73) Titulaire: CARBONE INDUSTRIE, Société Anonyme, 69627 Villeurbanne Cédex (FR); LIGIER SPORTS, F-58470 Magny-Cours (FR)
(72) Inventeur: ALLERA, Hubert, F-92290 Chatenay-Malabry (FR); PRUD'HOMME, Guy, F-69110 Ste-Foy-lès-Lyon (FR)
(74) Mandataire: Ropital-Bonvarlet, Claude
(86) Numéro de dépôt international: FR9000870
(87) Numéro de publication internationale: WO9108128

(56) Documents cités:
- DE-A- 2 736 968
- FR-A- 2 211 078
- GB-A- 1 154 786
- GB-A- 2 184 801

## Description

### DOMAINE TECHNIQUE :

La présente invention concerne les freins à disque, notamment pour véhicule automobile.

### TECHNIQUE ANTERIEURE :

La technique antérieure connaît, notamment par la publication **GB-A-2** **184** **801**, des freins à disque, notamment pour roue de véhicule automobile, du type comprenant, d'une part, un disque solidaire de la roue, coaxial à cette dernière et constitué par une partie annulaire concentrique montée en relation d'entraînement angulaire avec la roue tout en étant mobile axialement par rapport à celle-ci, un tel disque présentant une pluralité de conduits radiaux ouverts à Leurs extrémités et destinés au refroidissement par air et, d'autre part, deux garnitures de frein portées par un support de garnitures solidaire d'un moyeu fixe du véhicule, lesdites garnitures étant disposées de part et d'autre du disque et présentant des surfaces de frottement susceptibles d'exercer des forces de serrage sur ledit disque sous l'action de moyens de commande.

Ce type de frein connu est couramment employé dans les véhicules automobiles. Le disque est généralement en métaL et les garnitures, réalisées en une matière de friction, sont montées sur des étriers. Lors d'un freinage, la variation de L'énergie cinétique du véhicule est transformée en chaleur. Le disque s'échauffe et peut atteindre une température élevée, voisine de 600° C. Il est connu que les qualités de freinage des matériaux se dégradent rapidement à des températures plus élevées, c'est pourquoi, pour faciliter le refroidissement par air du disque, les garnitures ne recouvrent, généralement, qu'un secteur du disque. En contrepartie, le diamètre du disque est relativement important, de facon que les surfaces de frottement des garnitures soient suffisantes. Mais le disque n'étant pas totalement protégé par les garnitures, il peut se former, sur sa surface, une pellicule d'eau ou d'huile, par suite d'éclaboussures. Cette pellicule détériore fortement les qualités du frein. De plus, l'utilisation répétée du frein, en particulier en montagne, entraîne un échauffement excessif du disque et une dégradation notoire des capacités de freinage du véhicule.

Il est connu d'utiliser, pour les aéronefs, des freins à disque réalisés dans un matériau résistant à haute température et coopérant avec des garnitures réalisées dans le même matériau. Ces freins peuvent être constitués par des empilages de rotors et de stators constituant un "puits de chaleur" dont la capacité thermique permet de supporter l'ensemble de L'énergie développée lors du freinage, sans qu'il y ait lieu de rechercher un refroidissement intense, du fait que le freinage d'un aéronef ne s'effectue qu'à chaque atterrissage.

Une technique de construction voisine semble avoir été retenue par la publication **FR-A-2** **211** **O78** **(73-40** **996)** pour les freins de véhicules automobiles. La structure préconisée comprend au moins un disque tournant avec lequel peuvent coopérer deux disques annulaires de friction. Une telle structure s'apparente à un puits de chaleur n'ayant que peu de faculté de refroidissement, incompatible avec un usage fréquent du frein, comme cela est le cas des véhicules automobiles.

Le but de la présente invention est de proposer un frein, notamment pour véhicule automobile du type mentionné, qui conserve ses qualités de freinage à des températures élevées, dans lequel les surfaces de freinage sont protégées des projections d'eau et d'huile et dans lequel une ventilation très efficace est assurée.

### EXPOSE DE L'INVENTION :

Le frein à disque, notamment pour véhicule automobile, est caractérisé en ce que :
- le disque comprend une partie annulaire, dite externe, et une partie annulaire interne adaptée de façon amovible sur le moyeu de roue et portant la partie annulaire avec laquelle elle délimite des ouvertures axiales,
- chaque garniture de frein a la configuration d'un anneau coaxial audit disque et est dimensionnée de telle manière que sa face interne, formant surface de frottement, recouvre totalement la face adjacente de ladite partie externe,
- et en ce que, tant la partie annulaire que les garnitures, sont réalisées en carbone/carbone, présentent une pluralité de conduits radiaux ouverts à leurs extrémités, destinés à leur refroidissement par air et sont recouvertes, sur toutes leurs surfaces à l'exception des surfaces de frottement, d'une couche de peinture antioxydante.

Grâce à cette disposition, les pièces de freinage sont protégées de l'oxydation par ledit produit de protection. Seule une mince pellicule d'air est susceptible de se trouver entre les surfaces de frottement des garnitures et du disque, limitant ainsi l'oxydation possible de ces surfaces et, par le fait même, l'usure des pièces au freinage. Les températures admises dans les garnitures et le disque peuvent être notablement supérieures aux températures admises aujourd'hui, sans altération des qualités de freinage de l'ensemble. Cette élévation de température autorisée favorise l'échange naturel de chaleur avec l'air ambiant. Le refroidissement des pièces coopérant au freinage est amélioré par la présence des conduits radiaux dans lesquels circule l'air, par suite de la rotation de la roue et par les ouvertures axiales prévues entre les deux parties du disque. Les surfaces de freinage sont protégées des projections éventuelles d'huile ou d'eau et conservent leurs qualités de freinage. La surface de freinage s'étend sur une couronne dont la largeur annulaire peut être relativement petite par rapport à son diamètre. Le diamètre de cette couronne peut être diminué par rapport au diamètre du disque en fonte de l'art antérieur.

Avantageusement, l'une desdites garnitures, dite garniture fixe, est solidaire du moyeu du véhicule.

Le support de garnitures est constitué par un premier flasque annulaire rigide coaxial audit disque, disposé devant la face axiale externe de l'autre garniture, dite garniture mobile, et relié à la garniture fixe par une pluralité de pontets répartis sur la périphérie du support de garniture. La garniture mobile comporte des moyens coopérant avec lesdits pontets pour empêcher sa rotation et les moyens de commande sont prévus entre ledit premier flasque et ladite garniture mobile et sont isolés thermiquement de celle-ci par interposition de moyens de protection thermique entre eux et ladite garniture mobile.

Avantageusement, le support de garnitures comporte un deuxième flasque annulaire rigide coaxial au disque, qui est disposé devant la face axiale externe de ladite garniture fixe et est relié au premier flasque par lesdits pontets et des moyens de protection thermique sont interposés entre ledit deuxième flasque et la garniture fixe.

Avantageusement, les moyens de commande comprennent une pluralité de vérins hydrauliques, chaque vérin étant disposé au voisinage d'un pontet.

Chaque vérin comporte une chambre, ménagée dans ledit flasque et ouverte du côté de la garniture mobile, et un piston monté coulissant dans ladite chambre et prenant appui sur la face axiale externe de la garniture mobile, avec interposition d'un radiateur servant de moyen de protection thermique, lesdites chambres étant reliées entre elles par des conduits d'alimentation d'huile disposés de manière à permettre un dégazage du circuit hydraulique.

Avantageusement, les conduits d'alimentation d'huile sont noyés dans la masse du flasque.

D'autres avantages et caractéristiques de l'invention apparaîtront à la lecture de la description suivante, faite à titre d'exemple non limitatif et en référence aux dessins annexés.

### BREVE DESCRIPTION DES DESSINS :

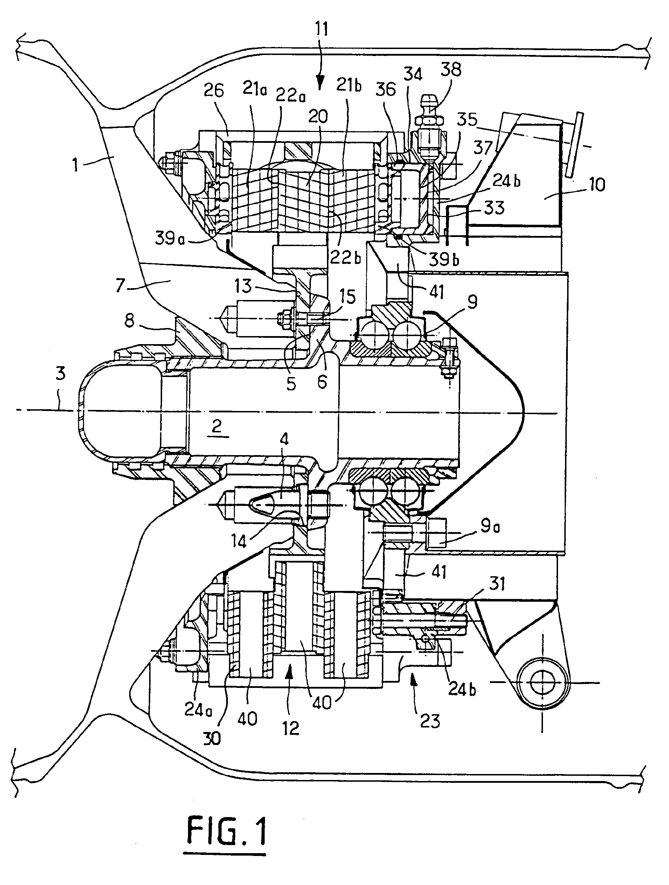

La **fig.** **1** est une coupe axiale d'un frein selon l'invention monté sur une roue de véhicule automobile.

La **fig.** **2** est une vue de côté du même frein dans laquelle La partie externe du disque est montrée en coupe.

La **fig.** **3** est une coupe partielle selon la ligne **III-III** de la **fig.** **2**.

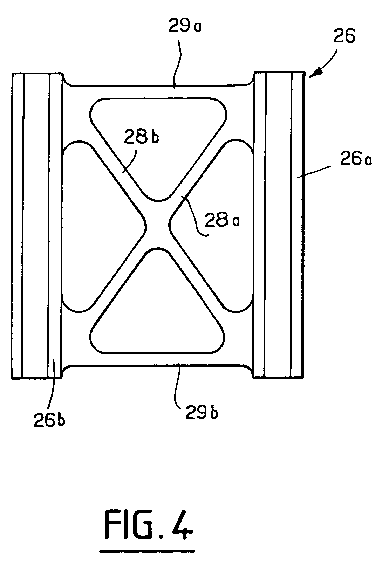

La **fig.** **4** montre en détail un pontet reliant les flasques du frein.

### MEILLEURE MANIERE DE REALISER L'INVENTION :

Comme on le voit sur le dessin, la roue **1** est tenue sur une fusée **2** d'axe **3** à l'aide de doigts de guidage **4** parallèles à l'axe **3** et s'étendant vers l'extérieur du véhicule à partir d'une face externe **5** d'un épaulement annulaire **6** prévu à la périphérie de la fusée **2**. Les doigts de guidage **4** pénètrent dans des ouvertures prévues en correspondance dans le moyeu **7** de la roue **1** et celle-ci est bloquée sur la fusée **2** à l'aide d'un écrou **8** fixé à L'extrémité externe de la fusée **2**. La fusée **2** est montée, par l'intermédiaire d'un roulement **9**, sur un moyeu **10** relié aux organes de suspension du véhicule. Le roulement **9** est fixé, par des vis **9a**, sur le moyeu **10**. Le moyeu **10** est immobilisé en rotation, mais il peut pivoter autour d'un axe vertical lorsque la roue **1** qu'il porte est directrice.

Un frein **11** est interposé entre la roue **1** et le moyeu **10**. Ce frein comporte un disque **12** dont la partie interne **13** est munie d'ouvertures **14** pour le passage des doigts de guidage **4** et est interposée entre l'épaulement annulaire 6 de la fusée 2 et le moyeu **7** de la roue **1**. Cette partie interne de disque **13** est fixée, sur l'épaulement annulaire **6** par des vis de fixation **15** et elle comporte, sur sa périphérie, une pluralité d'ailettes **16** qui s'étendent vers l'extérieur et qui sont en butée contre les parois axiales **17** de tenons **18** qui s'étendent vers l'intérieur, à partir de la paroi interne **19** d'un anneau formant la partie externe **20** du disque **12**. Il est à noter qu'il y a une ouverture axiale entre deux tenons consécutifs, lesdites ouvertures axiales étant destinées à la circulation de l'air pour la ventilation du frein.

Les tenons **18** sont interposés entre les ailettes **16**, de telle manière que la partie externe **20** du disque **12** puisse coulisser axialement sur la partie interne **13** et soit immobiLisée en rotation sur cette dernière.

Des garnitures de frein **21a** et **21b**, immobilisées en rotation, sont disposées de part et d'autre du disque **12**. Ces garnitures de frein **21a** et **21b** ont une forme annulaire et un gabarit identique au gabarit de la partie externe de disque **20** et elles sont disposées coaxialement au disque **12**, de telle manière que leurs surfaces axiales internes respectives **22a** et **22b**, qui forment les surfaces de freinage, recouvrent totalement les faces axiales adjacentes **20a** et **20b** de la partie externe de disque **20.**

Les garnitures de frein **21a** et **21b** sont portées par un support de garnitures **23** solidaire du moyeu **10**. Le support de garnitures **23** a la forme d'une cage d'écureuil et il comporte un premier flasque annulaire rigide **24b**, coaxial à l'axe de rotation **3** et disposé devant la face axiale externe **25b** de la garniture **21b** et un deuxième flasque annulaire rigide **24a** disposé devant la face axiale externe **25a** de la garniture **21a**.

Les deux flasques annulaires **24a** et **24b** sont reliés entre eux par une pluralité de pontets **26**, au nombre de cinq sur le dessin, interposés entre leurs faces internes et fixés par une pluralité de vis **27**. Les vis **27** empêchent les deux flasques annulaires **24a** et **24b** de s'écarter l'un de l'autre et les pontets **26** les empêchent de se rapprocher. Chaque pontet **26** comporte deux entretoises **26a** et **26b** parallèles à l'axe de rotation **3**, reliées entre elles par des croisillons **28a** et **28b** et des traverses **29a** et **29a**. Les vis **27** traversent les entretoises **26a** et **26b**. Les garnitures de frein **21a** et **21b** présentent, sur leur périphérie externe, des tenons **30** qui s'étendent vers l'extérieur et qui coopèrent avec les entretoises **26a** et **26b** pour immobiliser en rotation les garnitures de frein **21a** et **21b** par rapport au support de garnitures **23**, tout en permettant leur déplacement axial.

Le premier flasque **24b** est fixé au moyeu **10** par une pluralité de vis de fixation **31** et il porte les moyens de commande du frein **11** qui sont constitués par une pluralité de vérins hydrauliques **33** interposés entre le permier flasque **24b** et la garniture voisine **21b**, dite garniture mobile.

A cet effet, le premier flasque **24b** présente, au voisinage de chaque pontet **26**, une cavité cylindrique **34** ouverte du côté de la garniture mobile **21b**, en face de la paroi axiale externe **25b** de celle-ci, dans laquelle est monté coulissant un piston **35** avec interposition d'un joint d'étanchéité **36**, de manière à délimiter, du côté du fond de la cavité **34**, une chambre étanche **37** alimentée en huile par un conduit d'alimentation. L'huile est mise sous pression par actionnement de la pedale de frein. Ce conduit d'alimentation est noyé dans la masse du premier flasque **24b** et toutes les chambres **37** sont reliées entre elles par ce conduit d'alimentation d'huile, de telle manière qu'il soit aisé de purger le circuit à l'aide d'une vis de purge **38** prévue dans la partie supérieure du premier flasque **24b**. Chaque piston **35** est protégé de la chaleur dégagée au freinage par la garniture mobile **21b** par un radiateur **39b** interposé entre le piston **35** et la garniture **21b** et sur lequel la jupe externe du piston **35** est en appui.

De la même manière, un radiateur **39a** est interposé entre le deuxième flasque **24a** et la garniture voisine **21a**, dite garniture fixe, au voisinage de chaque pontet **26**. A cet effet, le flasque **24a** présente, également, des cavités **34** destinées à loger en partie les radiateurs **39a**.

La longueur des pontets **26** est calculée de telle manière que les radiateurs **39b** et **39a** sont situés, en partie, dans leur cavité respective 34, quelle que soit la force exercée sur les pistons **35**. De plus, les faces axiales externes **25a** et **25b** des garnitures **21a** et **21b** sont toujours maintenues éloignées des flasques voisins **24a** et **24b**, grace à un dimensionnement approprié des radiateurs **39a** et **39b**. Ces derniers sont réalisés dans un matériau résistant à des températures élevées et ils comportent une pluralité de conduits axiaux destinés à faciliter leur refroidissement par air.

La partie externe **20** du disque **12**, ainsi que les garnitures de frein **21a** et **21b**, sont réalisées dans un matériau résistant à haute température et, de préférence, en carbone/carbone et elles comportent une pluralité de conduits radiaux **40** destinés a leur refroidissement par air. Les conduits radiaux **40** sont ouverts à leurs deux extrémités. Ceux des garnitures **21a** et **21b** débouchent, d'une part, sur la peripherie externe du frein et, d'autre part, du côté de la fusée **2**, dans l'espace annulaire séparant les garnitures **21a** et **21b** de la fusée **2**. Les conduits radiaux **40** de la partie externe **20** du disque **12** débouchent, d'une part, sur la périphérie du frein et, d'autre part, dans les ouvertures axiales séparant les deux parties **13** et **20** du disque **12**.

Des déflecteurs d'air sont montés sur le support de garnitures **23** et des ouvertures de passage d'air **41** sont prévues sur le moyeu **10,** au droit des tenons **18** et des ailettes **16** de préférence, de manière à favoriser la ventilation du frein **11** lors de la rotation de la roue **1**.

Les surfaces externes des pièces de freinage, c'est-à-dire la partie externe **20** du disque **12** et les garnitures de frein **21a** et **21b**, sont recouvertes par un produit de protection contre l'oxydation. Il en est de même des parois des conduits radiaux **40**. Seules les surfaces de freinage de ces pièces ne sont pas recouvertes de ce produit de protection.

Le fonctionnement du frein **11** se comprend aisément. Sous l'action de la pedale de frein, l'huile est mise sous pression dans les chambres **37** et agit sur les pistons **35** qui, par l'intermédiaire des radiateurs **39b**, repoussent la garniture mobile **21b** contre la partie externe **20** du disque **12**. Celle-ci coulisse à son tour sur la partie interne **13** et vient en appui sur la garniture fixe **21a**. La partie externe **20** est ainsi serrée entre les deux garnitures **21a** et **21b** qui sont immobilisées en rotation par les tenons **30** qui sont en butée contre les pontets **26**.

La chaleur dégagée par le serrage du frein se répartit dans les pièces de freinage. Celles-ci ont des surfaces de contact limitées avec, respectivement, la partie interne **13** du disque **12** et le support de garnitures **23**. Cette énergie thermique est évacuée par l'air ambiant qui circule dans les conduits **40** et dans les conduits des radiateurs **39a** et **39b**.

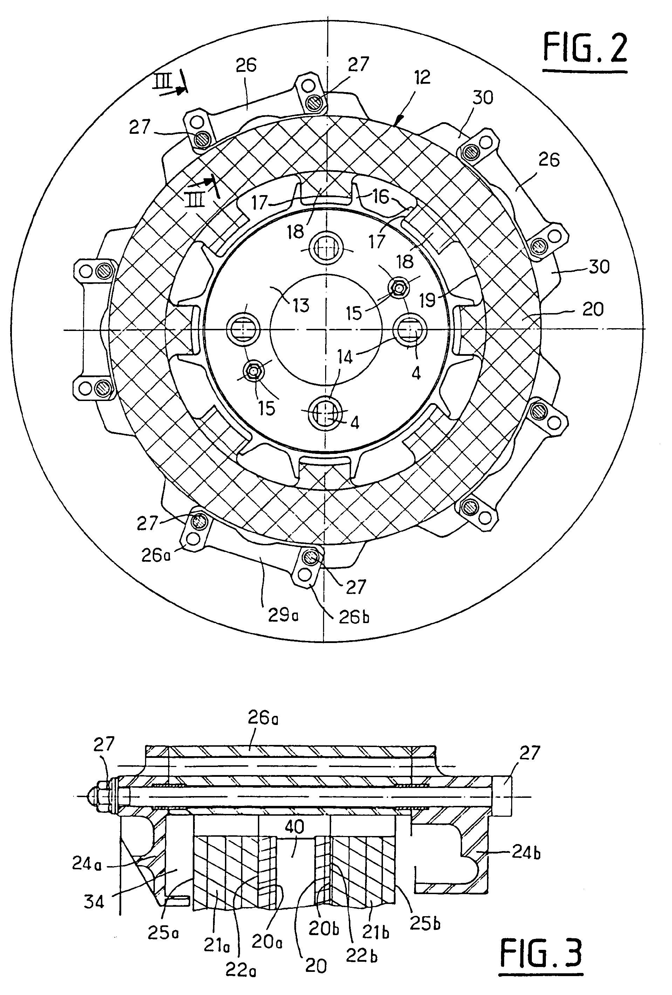

Les forces de réaction au freinage sont supportées par les tenons **30** des garnitures **21a** et **21b**, en appui sur les pontets **26** et les tenons internes **18** de la partie externe **20** du disque en appui sur les ailettes **16**. Ces forces étant fonction de la vitesse du véhicule en mouvement sont, en général, nettement plus grandes lors d'un freinage du véhicule en marche avant que lors d'un freinage du véhicule en marche arrière. C'est pourquoi, comme on le voit clairement sur la **fig.** **2**, les ailettes **16** en appui sur les parois **17** situées en arrière des tenons **18**, dans le sens de la marche avant du véhicule, sont plus nombreuses que les ailettes en appui sur les autres parois **17**.

De nombreuses modifications peuvent être apportées par l'homme de métier à la description faite ci-dessus. En particulier, le deuxième flasque **24a** peut être supprimé. Dans ce cas, le premier flasque **24b** servant d'appui aux vérins **33**, est relié directement par les pontets **26** à la garniture fixe **21a**. Le mode de blocage de la roue **1** peut, également, être réalisé par des écrous coopérant avec les doigts de guidage **4** qui sont alors filetés.

La structure de frein proposé permet, sous un volume réduit, de réaliser un frein puissant dans lequel la température des pièces de freinage, qui sont, de préférence, en carbone/carbone, peut être supérieure à La température admise dans les freins de l'art antérieur. Le recouvrement des pièces de freinage par le produit de protection contre l'oxydation évite La combustion de ces pièces à haute température. Les conduits d'aération radiaux **40**, ménagés dans ces pièces, permettent un échange de chaleur rapide avec l'air ambiant. La présence des radiateurs **39a** et **39b** et les faibles surfaces de contact des pièces chaudes avec les pièces métalliques évitent une montee exagérée de la température des éléments voisins des pièces de freinage.

### POSSIBILITE D'APPLICATION INDUSTRIELLE :

Ce type de frein est particulièrement adapté a tout type de véhicule soumis à des freinages fréquents et puissants et, en particulier, à des véhicules automobiles de course.

## Revendications

1. Frein à disque, notamment pour roue de véhicule automobile, du type comprenant, d'une part, un disque (**12**) solidaire de la roue, coaxial à cette dernière et constitué par une partie annulaire concentrique (**20**) montée en relation d'entraînement angulaire avec la roue tout en étant mobile axialement par rapport à celle-ci, un tel disque présentant une pluralité de conduits radiaux (**40**) ouverts à leurs extrémités et destinés au refroidissement par air et, d'autre part, deux garnitures de frein (**21a**, **21b**) portées par un support de garnitures (**23**) solidaire d'un moyeu fixe (**10**) du véhicule, lesdites garnitures (**21a**, **21b**) étant disposées de part et d'autre du disque (**12**) et présentant des surfaces de frottement susceptibles d'exercer des forces de serrage sur ledit disque (**12**) sous l'action ce moyens de commande,
caractérisé en ce que :
- Le disque (**12**) comprend la partie annulaire (**20**), dite externe, et une partie annulaire interne (**13**) adaptée de façon amovible sur le moyeu de roue (**7**) et portant la partie annulaire (**20**) avec laquelle elle délimite des ouvertures axiales,
- chaque garniture de frein (**21a**, **21b**) a la configuration d'un anneau coaxial audit disque (**12**), et est dimensionnée de telle manière que sa face interne (**22a**, **22b**) formant surface de frottement recouvre totalement la face adjacente (**20a**, **20b**) de ladite partie externe (**20**),
- et en ce que, tant la partie annulaire (**20**) que les garnitures (**21a,** **21b**) sont réalisées dans un matériau résistant à haute température, notamment le carbone/carbone, présentent une pluralité de conduits radiaux (**40**) ouverts à leurs extrémités destinés à leur refroidissement par air et sont recouvertes sur toutes leurs surfaces, à l'exception des surfaces de frottement par un produit de protection contre l'oxydation.

2. Frein selon la revendication 1, caractérisé en ce que :
- l'une desdites garnitures, dite garniture fixe (**21a**), est solidaire du moyeu fixe (**10**) du véhicule,
- le support de garnitures (**23**) est constitué par un premier flasque annulaire rigide (**24b**) coaxial audit disque (**12**) disposé devant la face axiale externe (**25b**) de l'autre garniture, dite garniture mobile **(21b**)**,** et relié à la garniture fixe (**21a**) par une pluralité de pontets (**26**) répartis sur la périphérie du support de garniture,
- la garniture mobile (**21b**) comporte des moyens (**30**) coopérant avec lesdits pontets (**26**) pour empêcher sa rotation,
- et en ce que les. moyens de commande sont prévus entre ledit premier flasque (**24b**) et ladite garniture mobile (**21b**) et sont isolés thermiquement de celle-ci par interposition de moyens de protection thermique (**39b**) entre eux et ladite garniture mobile (**21b**).

3. Frein selon la revendication 2, caractérisé en ce que :
- le support de garnitures (**23**) comporte un deuxième flasque annulaire rigide (**24a**) coaxial au disque (**12**), qui est disposé devant la face axiale externe (**25a**) de ladite garniture fixe (**21a**) et est relié au premier flasque (**24b**) par lesdits pontets (**16**),
- et en ce que des moyens de protection thermique (**39a**) sont interposés entre ledit deuxième flasque (**24a**) et la garniture fixe (**21a**).

4. Frein selon l'une quelconque des revendications 2 et 3, caractérisé en ce que les moyens de commande comprennent une pluralité de vérins hydrauliques (**33**), chaque vérin (**33**) étant disposé au voisinage d'un pontet (**26**).

5. Frein selon la revendication 4, caractérisé en ce que chaque vérin (**33**) comporte une chambre (**37**) ménagée dans ledit premier flasque (**24b**) et ouverte du côté de la garniture mobile (**21b**), et un piston (**35**) monté coulissant dans ladite chambre (**37**) et prenant appui sur la face axiale externe (**25b**) de la garniture mobile (**21b**) avec interposition d'un radiateur (**39b**) servant de moyen de protection thermique, lesdites chambres (**37**) étant reliées entre elles par des conduits d'alimentation d'huile disposés de manière à permettre un dégazage du circuit hydraulique.

6. Frein selon la revendication 5, caractérisé en ce que les conduits d'alimentation sont prévus dans la masse du premier flasque (**24b**).

7. Frein selon l'une quelconque des revendications 1 à 6, caractérisé en ce que :
- la partie externe (**20**) du disque (**12**) présente une pluralité de tenons (**18**) qui s'étendent vers l'intérieur à partir de sa paroi annulaire interne (**19**),
- la partie interne (**13**) du disque (**12**) présente une pluralité d'ailettes (**16**) qui s'étend vers l'extérieur à partir de sa périphérie, lesdites ailettes (**16**) coopérant avec les parois radiales (**17**) desdits tenons (**18**) pour empêcher la rotation relative de la partie interne (**13**) par rapport à la partie externe (**20**).

8. Frein selon la revendication 7, caractérisé en ce que le nombre d'ailettes (**16**) supportant les efforts de freinage en marche arrière du véhicule est inférieur au nombre d'ailettes (**16**) supportant les efforts de freinage en marche avant du véhicule.

## Patentansprüche

1. Scheibenbremse, insbesondere für Räder von Kraftfahrzeugen, vom Typ, der zum einen eine fest mit dem Rad verbundene Scheibe (12) umfaßt, die koaxial zu dieser verläuft und von einem konzentrischen, ringförmigen Bereich (20) gebildet wird, der in winkligem Antriebsverhältnis mit dem Rad montiert und dabei gleichzeitig axial zu diesem beweglich ist, wobei eine solche Scheibe mehrere an ihren Enden offene Radialkanäle (40) zur Luftkühlung aufweist, und zum anderen zwei Bremsbeläge (21a, 21b), die von einem Bremsbelaghalter (23) getragen werden, der fest mit einer festen Nabe (10) des Fahrzeugs verbunden ist, wobei diese Beläge (21a, 21b) beidseits der Scheibe (12) angeordnet sind und Reibungsflächen aufweisen, die geeignet sind, auf diese Scheibe (12) mit Hilfe von Steuervorrichtungen Spannkräfte auszuüben,
dadurch gekennzeichnet, daß:
- die Scheibe (12) den ringförmigen, sogenannten äußeren Bereich (20) sowie einen inneren ringförmigen Bereich (13) aufweist, der abnehmbar an die Radnabe (7) montiert ist und den ringförmigen Bereich (20) trägt, mit dem er Axialöffnungen bildet,
- jeder Bremsbelag (21a, 21b) die Form einem zur genannten Scheibe (12) koaxialen Rings aufweist und so bemessen ist, daß seine Innenseite (22a, 22b), welche die Reibungsfläche bildet, die angrenzende Seite (20a, 20b) dieses äußeren Bereichs (20) vollkommen bedeckt,
- sowie dadurch, daß sowohl der ringförmige Bereich (20) als auch die Beläge (21a, 21b) aus einem hochtemperaturbeständigen Werkstoff, insbesondere einem Kohlenstoff-Kohlenstoff-Werkstoff, bestehen und eine Mehrzahl von an ihren Enden offenen Radialkanälen (40) zu ihrer Kühlung mit Luft aufweisen und auf allen ihren Oberflächen mit Ausnahme der Reibungsflächen mit einem Rostschutzmittel versehen sind.

2. Bremse nach Anspruch 1, dadurch gekennzeichnet, daß
- einer dieser Bremsbeläge, der fester Belag (21a) genannt wird, fest mit der festen Nabe (10) des Fahrzeugs verbunden ist,
- der Bremsbelaghalter (23) aus einem ersten starren, ringförmigen, zu der Scheibe (12) koaxialen Flansch (24b) besteht, der vor der äußeren Axialfläche (25b) des anderen, sogenannten beweglichen Belags (21b) angeordnet und mit dem festen Belag (21a) durch mehrere Bügel (26) verbunden ist, die am Umfang des Bremsbelaghalters vorgesehen sind,
- der bewegliche Belag (21b) Vorrichtungen (30) aufweist, die mit diesen Bügeln (26) zusammenwirken, um deren Drehung zu verhindern,
- und dadurch, daß die Steuervorrichtungen zwischen dem ersten Flansch (24b) und dem beweglichen Belag (21b) vorgesehen sind und thermisch von diesem durch das Zwischensetzen von Wärmeschutzvorrichtungen (39b) zwischen ihnen und diesem beweglichen Belag (21b) abgeschirmt sind.

3. Bremse nach Anspruch 2, dadurch gekennzeichnet, daß:
- der Bremsbelaghalter (23) einen zweiten starren, ringförmigen, zur Scheibe (12) koaxialen Flansch (24a) aufweist, der vor der äußeren Axialseite (25a) des besagten festen Bremsbelags (21a) angeordnet und mit dem ersten Flansch (24b) durch die besagten Bügel (26) verbunden ist,
- sowie dadurch, daß die Wärmeschutzvorrichtungen (39a) zwischen diesem zweiten Flansch (24a) und dem festen Belag (21a) vorgesehen sind.

4. Bremse nach einem der Ansprüche 2 und 3, dadurch gekennzeichnet, daß die Steuervorrichtungen mehrere Hydraulikzylinder (33) umfassen, wobei jeder Zylinder (33) in der Nähe eines Bügels (26) angeordnet ist.

5. Bremse nach Anspruch 4, dadurch gekennzeichnet, daß jeder Zylinder (33) eine in den ersten Flansch (24b) gearbeitete Kammer (37) aufweist, die auf der Seite des beweglichen Belags (21b) offen ist, sowie einen Kolben (35), der gleitend in der genannten Kammer (37) montiert ist und an die äußere Axialseite (25b) des beweglichen Belags (21b) anliegt, wobei ein Kühler (39b), der als Wärmeschutzvorrichtung dient, dazwischengesetzt ist und die Kammern (37) miteinander durch Ölversorgungsleitungen verbunden sind, die so angeordnet sind, daß sie eine Entgasung des Hydraulikkreislaufs ermöglichen.

6. Bremse nach Anspruch 5, dadurch gekennzeichnet, daß die Versorgungsleitungen in der Masse des ersten Flansches (24b) vorgesehen sind.

7. Bremse nach einem der Ansprüche 1 bis 6, dadurch gekennzeichnet, daß:
- der äußere Bereich (20) der Scheibe (12) mehrere Zapfen (18) aufweist, die sich von seiner ringförmigen Innenwand (19) aus nach innen erstrecken,
- der Innenbereich (13) der Scheibe (12) mehrere Schaufeln (16) aufweist, die sich von ihrem Umfang nach außen erstrecken und mit den Radialwänden (17) der genannten Zapfen (18) zusammenwirken, um die jeweilige Drehung des Innenbereichs (13) zum Außenbereich (20) zu verhindern.

8. Bremse nach Anspruch 7, dadurch gekennzeichnet, daß die Anzahl der Schaufeln (16), auf welche die Bremskräfte im Rückwärtsgang des Fahrzeugs treffen, geringer ist als die Anzahl der Schaufeln (16), auf welche die Bremskräfte im Vorwärtsgang des Fahrzeugs treffen.

## Claims

1. Disc brake, particularly for automobile vehicle wheel, of the type comprising, on the one hand, a disc (12) fast with the wheel, coaxial thereto and constituted by a concentric annular part (20) mounted in angular drive relation with the wheel while being axially mobile with respect thereto, such a disc presenting a plurality of radial passageways (40) open at their ends and intended for cooling by air and, on the other hand, two brake pads (21a, 21b) borne by a pad support (23) fast with a fixed hub (10) of the vehicle, said pads (21a, 21b) being disposed on either side of the disc 12 and presenting friction surfaces capable of exerting tightening forces on said disc (12) under the action of control means,
characterized in that:
- the disc (12) comprises the so-called outer annular part (20) and an inner annular part (13) fitted in removable manner on the wheel hub (7) and bearing the annular part (20) with which it defines axial openings,
- each brake pad (21a, 21b) has the configuration of a ring coaxial to said disc (12) and is dimensioned so that its inner face (22a, 22b) forming friction surface, totally covers the adjacent face (20a, 20b) of said outer part (20),
- and in that both the annular part (20) and the pads (21a, 21b) are made of a material resistant to high temperature, particularly carbon/carbon, present a plurality of radial passageways (40) open at their ends intended for their cooling by air and are covered over all their surfaces, except for the friction surfaces, with a product for protection against oxidation.

2. Brake according to claim 1, characterized in that:
- one of the pads, called fixed pad (21a), is fast with the hub (10) of the vehicle,
- the pad support (23) is constituted by a first rigid annular shield (24b) coaxial to said disc (12) disposed in front of the outer axial face (25b) of the other pad, called mobile pad (21b), and connected to the fixed pad (21a) by a plurality of bridges (26) distributed over the periphery of the pad support,
- the mobile pad (21b) comprises means (30) cooperating with said bridges (26) to prevent rotation thereof,
- and the control means are provided between said first shield (24b) and said mobile pad (21b) and are thermally insulated therefrom by the interposition of thermal protection means (39b) between them and said mobile pad (21b).

3. Brake according to claim 2, characterized in that:
- the pad support (23) comprises a second rigid annular shield (24a) coaxial to the disc (12), which is disposed in front of the outer axial face (25a) of said fixed pad (21a) and is connected to the first shield (24b) by said bridges (16),
- and in that thermal protection means (39a) are interposed between the second shield (24a) and the fixed pad (21a).

4. Brake according to either one of claims 2 and 3, characterized in that the control means comprise a plurality of hydraulic jacks (33), each jack (33) being disposed in the vicinity of a bridge (26).

5. Brake according to claim 4, characterized in that each jack (33) comprises a chamber (37), formed in the first shield (24b) and open towards the mobile pad (21b), and a piston (35) mounted to slide in the chamber (37) and abutting on the outer axial face (25b) of the mobile pad (21b) with the interposition of a radiator (39b) serving as thermal protection means, said chambers (37) being connected together via oil supply conduits disposed so as to allow a degassing of the hydraulic circuit.

6. Brake according to claim 5, characterized in that the supply conduits are provided in the mass of the first shield (24b).

7. Brake according to any one of claims 1 to 6, characterized in that:
- the outer part (20) of the disc (12) presents a plurality of tenons (18) which extend inwardly from its inner annular wall (19),
- the inner part (13) of the disc (12) presents a plurality of fins (16) which extend outwardly from its periphery, said fins (16) cooperating with the radial walls (17) of said tenons (18) in order to prevent relative rotation of the inner part (13) with respect to the outer part (20).

8. Brake according to claim 7, characterized in that the number of fins (16) supporting the braking efforts when the vehicle is in reverse motion, is less than the number of fins (16) supporting the braking efforts when the vehicle is in forward motion.
